# EUROPEAN PATENT SPECIFICATION

(11) **EP 1 902 281 B1**
(45) Date of publication and mention of the grant of the patent: **18.06.2014**
(21) Application number: 06784936.4
(22) Date of filing: 15.06.2006
(51) Int. Cl.: G01N 21/21

(54) **SAMPLE ORIENTATION SYSTEM AND METHOD**
SYSTEM UND VERFAHREN ZUR PROBENAUSRICHTUNG
SYSTÈME ET PROCÉDÉ D ORIENTATION D ÉCHANTILLON

(30) Priority: 08.07.2005 US 177207
(43) Date of publication of application: 26.03.2008
(73) Proprietor: J.A. WOOLLAM CO. INC., Lincoln, Nebraska 68508 (US)
(72) Inventor: Liphardt, Martin M., Lincoln, Nebraska, 68523 (US)
(74) Representative: Beck Greener
(86) International application number: PCT/US2006/023348
(87) International publication number: WO 2007/008335

(56) References cited:
- DE-A1- 2 207 194
- JP-A- 7 260 684
- JP-A- 10 048 050
- US-A- 5 042 951
- US-A- 5 657 126
- US-A- 5 798 837
- US-A- 6 091 499
- US-A- 6 091 499
- US-B1- 6 208 418

## Description

### TECHNICAL FIELD

The disclosed invention relates to systems for adjusting sample orientation, and more particularly to systems and methods for orienting the vertical position, and tilt, of samples in ellipsometer and the like systems.

### BACKGROUND

It is known to place samples on stages in ellipsometer and the like systems, and to cause a polarized beam of electromagnetic radiation to impinge on said sample at an oblique angle thereto, interact with said sample and then enter a detector. It is also known that the "tilt" of a sample surface at a specific location thereon can affect realized angle and plane of incidence values actually achieved. Further, it is known to adjust the vertical height of the stage to position a sample such that a beam of electromagnetic radiation reflecting therefrom enters a detector.

A Patent to Abraham et al., No. 6,091,499 describes a method and system for automatic relative adjustment of samples in relation to an ellipsometer. Paraphrasing, said Abraham et al. system basically comprises:
a system for orienting a sample on a stage in an ellipsometer system comprising a first light source, a polarizer, said stage, an analyzer and a detector;
said system further comprising a detection system having a second light source, wherein said detection system is independently adjustable in relation to said ellipsometer, and wherein said detection system can be electronically locked into position relative to said ellipsometer so that said ellipsometer and said detection system can be adjusted as one unit in relationship to said stage, wherein said detection system can detect both a tilt of a sample placed onto said stage, and a distance of said sample from a coordinate source of the ellipsometer in two perpendicular axes; and
said system further comprising an adjusting device, wherein said adjusting device can adjust tilt of said stage, and wherein said adjusting device can adjust the position of said ellipsometer and detection system when in an electronically locked relationship with respect to one another.

The 499 Patent drawings show a single source, (identified as (21)), provides, via beam splitters and reflection means, normal and oblique angle of incidence electromagnetic beams to a sample, which normal and oblique angle of incidence electromagnetic beams are each intercepted by a different detector, (identified as (24) and (25) respectively), after reflecting from the sample. The associated ellipsometer system comprises a separate source, (identified as (11)).

Additional known Patents are:
Patent to Coates No. 4,373,817;
Patent to Coates No. 5,045,704;
RE. 34,783 to Coates;
Patent to Mikkelsen et al., No. 6,600,560;
Patent to Fanton et al., No. 5,596,411;
Patent to Piwonka-Corle et al., No. 5,910,842;
Patent to Piwonka-Corle et al., No. 5,608,526;
Patent to Bareket, No. 5,889,593;
Patent to Norton et al., No. 5,486,701;
Patent to Aspnes et al., No. 5,900,939;
Patent to Aspnes et al. No. 5,798,837;
Patent to Rosencwaig et al. No. 5,412,473;
PCT Application Publication WO 99/45340;
Published Application of Stehle et al., No. US2002/0024668 A1.

Need remains for additional systems and methods for orienting the vertical position, and tilt, of samples in ellipsometer, polarimeter, spectrophotometer and the like systems.

### DISCLOSURE OF THE INVENTION

A system of the present disclosure comprises means for causing electromagnetic radiation to impinge upon a sample along both substantially normal and oblique angles of incidence. Said electromagnetic radiation which impinges upon said sample at said oblique angle of incidence is caused to pass through focusing and collimating lenses before and after said sample respectively and said normal and oblique angle of incidence electromagnetic radiation being directed to enter the same or different detectors after interaction with said sample. Said system is characterized in that the length of the path of the electromagnetic radiation which impinges on said sample at an oblique angle of incidence, between said collimating lens and said detector to which it is directed is at least "X" times longer than the length of the path of said electromagnetic radiation between said sample and said collimating lens, where "X" is typically in the range of 2 - 10. The benefit of the identified "X" factor is that it acts as the equivalent of a "lever arm", to improve the system sensitivity to the height of a sample surface.

Further, said system can cause the electromagnetic radiation which is caused to approach said sample along both the normal and oblique angles of incidence are directed into a single detector, and typically there is at least one reflective electromagnetism reflective means in the pathway of the electromagnetic radiation which is caused to approach said sample along both the oblique angle of incidence to said sample. Where only one detector is present said system further comprises means for selectively directing only one selection from the group consisting of:
the electromagnetic radiation which is caused to approach said sample along the normal angle of incidence; and
the electromagnetic radiation which is caused to approach said sample along the oblique angle of incidence;
into said single detector at a time. Said means can be a shutter system.

One system provides electromagnetic radiation which is caused to approach said sample along both the normal and oblique angles of incidence to be provided from a single source of electromagnetism.

Further, one system provides that electromagnetic radiation intensity modulating means, (eg. a beam chopper), be present in the pathway of at least one selection from the group consisting of:
the electromagnetic radiation which is caused to approach said sample along the normal angle of incidence; and
the electromagnetic radiation which is caused to approach said sample along the oblique angle of incidence.

When intensity is modulated by such as a beam chopper, data can be obtained in a lit room without the external light adversely affecting the data signal.

additional system description will be presented in the Detailed Description Section of this Specification as it is helpful to have reference to the Drawings.

The method of use of the present disclosure involves adjusting the vertical location of the sample, and the tilt thereof until the alignment detector, or detectors, indicate proper alignment. It is noted that this does not require movement of an ellipsometer system applied to investigate a sample, or an adjusting device which is electronically coupled into a relationship with said ellipsometer.

More specifically, a disclosed method of investigating a sample comprises the steps of:
practicing steps a and b in either order:
   a) providing an ellipsometer or the like system which sequentially comprises a source of a beam of electromagnetism, polarizer means for imposing a state of polarization on said beam, a stage for supporting a sample, analyzer means for selecting polarization states of a beam of electromagnetic radiation after it interacts with a specific location on a sample placed on said stage, and an ellipsometer detector;
   b) providing a sample alignment system such that electromagnetic radiation produced thereby is caused to impinge on substantially the same point on said sample as does the ellipsometer beam, reflect therefrom both substantially normally and at an oblique angle, and enter at least one alignment detector;
   c) using output from said at least one alignment detector provided in step b to effect vertical height and tilt alignment of the sample;
   d) with the sample aligned, obtaining ellipsometric data from the ellipsometer detector;
   e) analyzing said ellipsometer system data.

Said method can further comprise, in step b, providing an automatic alignment system which comprises means for receiving input from the alignment detector or detectors and automatically effecting sample vertical height and tilt alignment, and in step c the using of output from said alignment detector or detectors to effect automated vertical height and tilt alignment of the sample.

The disclosed invention will be better understood by reference to the Detailed Description Section of this Disclosure, in combination with the Drawings.

### DISCLOSURE OF THE INVENTION

A system of the present disclosure comprises means for causing electromagnetic radiation to impinge upon a sample along both substantially normal and oblique angles of incidence. Said electromagnetic radiation which impinges upon said sample at said oblique angle of incidence is caused to pass through focusing and collimating lenses before and after said sample respectively and said normal and oblique angle of incidence electromagnetic radiation being directed to enter the same or different detectors after interaction with said sample. Said system is characterized in that the length of the path of the electromagnetic radiation which impinges on said sample at an oblique angle of incidence, between said collimating lens and said detector to which it is directed is at least "X" times longer than the length of the path of said electromagnetic radiation between said sample and said collimating lens, where "X" is typically in the range of 2 - 10. The benefit of the identified "X" factor is that it acts as the equivalent of a "lever arm", to improve the system sensitivity to the height of a sample surface.

Further, said system can cause the electromagnetic radiation which is caused to approach said sample along both the normal and oblique angles of incidence are directed into a single detector, and typically there is at least one reflective electromagnetism reflective means in the pathway of the electromagnetic radiation which is caused to approach said sample along both the oblique angle of incidence to said sample. Where only one detector is present said system further comprises means for selectively directing only one selection from the group consisting of:
the electromagnetic radiation which is caused to approach said sample along the normal angle of incidence; and
the electromagnetic radiation which is caused to approach said sample along the oblique angle of incidence;
into said single detector at a time. Said means can be a shutter system.

One system provides electromagnetic radiation which is caused to approach said sample along both the normal and oblique angles of incidence to be provided from a single source of electromagnetism.

Further, another system provides that electromagnetic radiation intensity modulating means, (eg. a beam chopper), be present in the pathway of at least one selection from the group consisting of:
the electromagnetic radiation which is caused to approach said sample along the normal angle of incidence; and
the electromagnetic radiation which is caused to approach said sample along the oblique angle of incidence.

When intensity is modulated by such as a beam chopper, data can be obtained in a lit room without the external light adversely affecting the data signal.

Additional system description will be presented in the Detailed Description Section of this Specification as it is helpful to have reference to the Drawings.

The method of use of the present disclosure involves adjusting the vertical location of the sample, and the tilt thereof until the alignment detector, or detectors, indicate proper alignment. It is noted that this does not require movement of an ellipsometer system applied to investigate a sample, or an adjusting device which is electronically coupled into a relationship with said ellipsometer.

More specifically, a disclosed method of investigating a sample comprises the steps of:
practicing steps a and b in either order:
   a) providing an ellipsometer or the like system which sequentially comprises a source of a beam of electromagnetism, polarizer means for imposing a state of polarization on said beam, a stage for supporting a sample, analyzer means for selecting polarization states of a beam of electromagnetic radiation after it interacts with a specific location on a sample placed on said stage, and an ellipsometer detector;
   b) providing a sample alignment system such that electromagnetic radiation produced thereby is caused to impinge on substantially the same point on said sample as does the ellipsometer beam, reflect therefrom both substantially normally and at an oblique angle, and enter at least one alignment detector;
   c) using output from said at least one alignment detector provided in step b to effect vertical height and tilt alignment of the sample;
   d) with the sample aligned, obtaining ellipsometric data from the ellipsometer detector;
   e) analyzing said ellipsometer system data.

Said method can further comprise, in step b, providing an automatic alignment system which comprises means for receiving input from the alignment detector or detectors and automatically effecting sample vertical height and tilt alignment, and in step c the using of output from said alignment detector or detectors to effect automated vertical height and tilt alignment of the sample.

The disclosed invention will be better understood by reference to the Detailed Description Section of this Disclosure, in combination with the Drawings.

### BRIEF DESCRIPTION OF THE DRAWINGS

Fig. 1 shows a sample alignment system.
Fig. 2 shows an embodiment of a disclosed invention sample alignment system.
Fig. 3 shows an embodiment of a disclosed invention sample alignment system.
Fig. 4 shows an embodiment of a disclosed invention sample alignment system.
Fig. 5 shows a sample alignment system.
Fig. 6 is included to show a system suited to practicing a similar purpose as is the present invention.

### DETAILED DISCLOSURE OF THE INVENTION

The present disclosure is of new system and methodology for alignment of both tilt, and vertical positioning, of samples, which systems are well suited for automated operation.

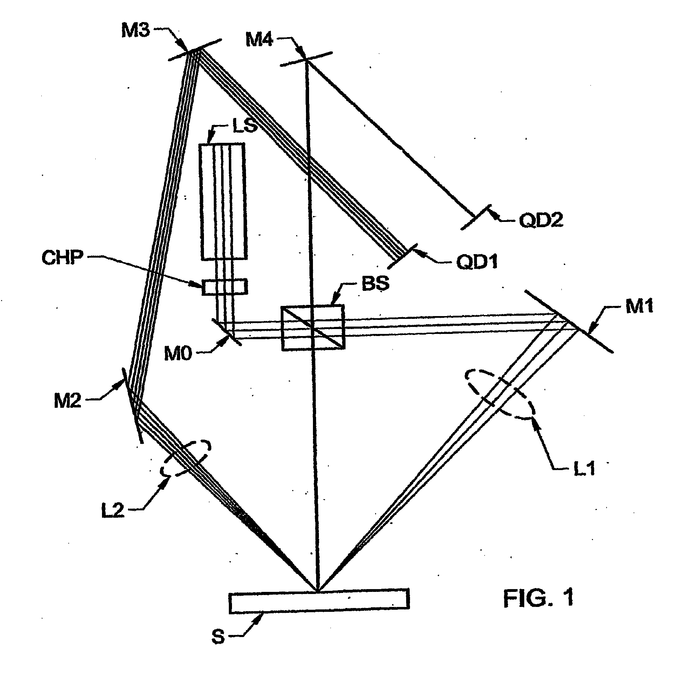

Turning now to Fig. 1, a sample alignment system comprises:
a) a source (LS) of electromagnetic radiation;
b) a beam splitter (BS);
c) at least first (M1) mirror and optionally additional (eg. second (M2), third (M3) and forth (M4) mirrors);
d) first (QD1) and second (QD2) alignment detectors;
e) at least focusing (L1) and collimating (L2) lenses; and
f) a stage for supporting a sample (S).

Said source (LS) of electromagnetic radiation is positioned to direct a beam of electromagnetic radiation toward said beam splitter (BS). Said beam splitter (BS) is positioned to direct a first portion of said beam toward said first mirror (M1), which reflects said first portion of said beam through said focusing lens (L1) and obliquely onto said sample (S) such that it impinges at substantially to same location at which the second portion of said beam, which is directed normally toward said sample (S), impinges. Said second portion of said beam is reflected from said sample (S) substantially directly back along the path of its incidence, through said beam splitter (BS) and into said second alignment detector (QD2). Said first portion of said beam is reflected from said sample (S), through said collimating lens (L2) and into said first alignment detector (QD1).

This example can further comprise at least one selection from the group consisting of:
a beam directing mirror (M0) between said light source (LS) and said beam splitter (BS);
at least one beam directing mirror ((M2) and/or (M3)) between said collimating lens (L2) and said first alignment detector (QD1);
at least one beam directing mirror (M4) between said beam splitter (BS) and said second alignment detector (QD2).

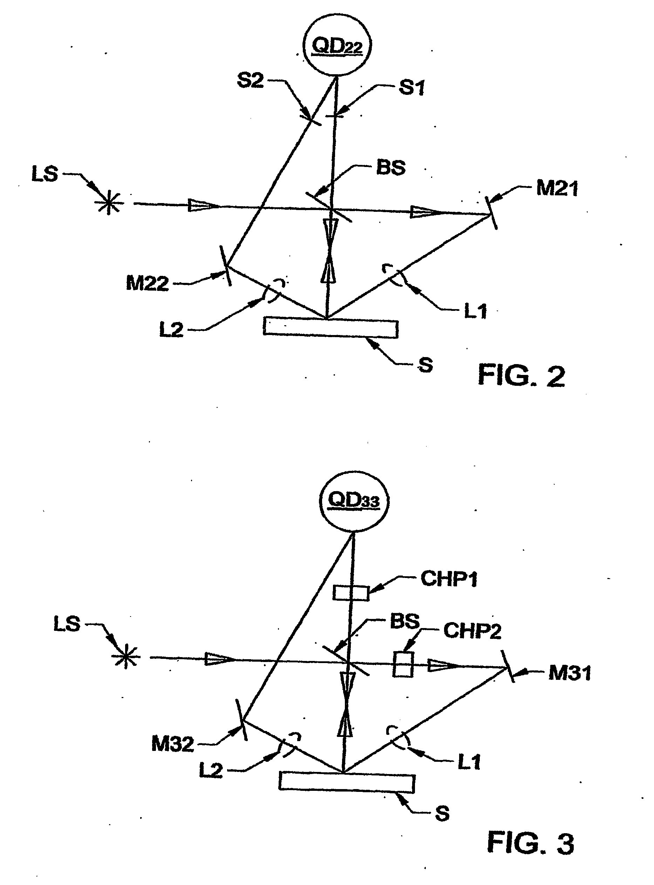

Turning now to Fig. 2, a sample alignment system embodiment comprises:
a) a source of electromagnetism (LS);
b) a beam splitter (BS);
c) at least first (M21) and second (M22) mirrors;
d) an alignment detector (QD22);
e) first and second shutters (S1) and (S2); and
f) a stage for supporting a sample (S).

Said beam splitter (BS) is positioned to direct a first portion of a beam of electromagnetism from said source (LS) thereof normal onto said sample (S) and a second portion thereof toward said first mirror (M21) which reflects it onto said sample (S) at an oblique angle such that it impinges thereupon at substantially the same location at which the first portion of said beam impinges. Said first portion of said beam, after normally reflecting from said sample (S) is directed back along the path of its incidence, through said beam splitter (BS) and toward said alignment detector (QD22). Said second portion of said beam, after obliquely reflecting from said sample (S), is directed to reflect from said second mirror (M22) toward said alignment detector (QD22). Said first shutter (S1) is in the pathway of said beam which passes through said beam splitter (BS) toward said alignment detector (QD22), and said second shutter (S2) is in the pathway of said beam which reflects from said second mirror (M22). In use said shutters (S1) (S2) are operated to sequentially allow entry into said alignment detector (QD22) of electromagnetic radiation:
normally reflected from said sample (S) and directed back along the path of its incidence, through said beam splitter (BS) and toward said alignment detector (QD22); and
obliquely reflected from said second mirror (M22) toward said alignment detector (QD22).

It is noted that focusing (L1) and collimating (L2) lenses can optionally be applied.

Turning now to Fig. 3, a sample alignment system embodiment comprises:
a) a source of electromagnetism (LS);
b) a beam splitter (BS);
c) at least first (M21) and second (M22) mirrors;
d) an alignment detector (QD33);
e) first and second choppers (CHP1)) and (CHP2); and
f) a stage for supporting a sample (S).

Said beam splitter (BS) is positioned to direct a first portion of a beam of electromagnetism from said source (LS) thereof normal onto said sample (S) and a second portion thereof toward said first mirror (M31) which reflects it onto said sample (S) at an oblique angle such that it impinges thereupon at substantially the same location at which the first portion of said beam impinges. Said first portion of said beam, after normally reflecting from said sample (S) is directed back along the path of its incidence, through said beam splitter (BS) and normally toward said sample and after reflection therefrom toward said alignment detector (QD33). Said second portion of said beam, after obliquely reflecting from said sample (S), is directed to reflect from said second mirror (M32) toward said alignment detector (QD33). Said first chopper (CHP1) is in the pathway of said beam which passes through said beam splitter (BS) toward said alignment detector (QD33), and said second chopper (CHP2) is in the pathway of said beam which passes through the beam splitter (BS) toward the first mirror (M31), and after being directed thereby to obliquely reflect from said sample (S), being directed to reflect from said second mirror (M32) toward said alignment detector (QD33). In use said choppers (CHP1) and (CHP2) are operated at different frequencies which are distinguishable by the alignment detector (QD33).

It is noted that the choppers (CHP1) and (CHP2) can be placed in any functional location in the relevant beam path way.

It is noted that focusing (L1) and collimating (L2) lenses can optionally be applied.

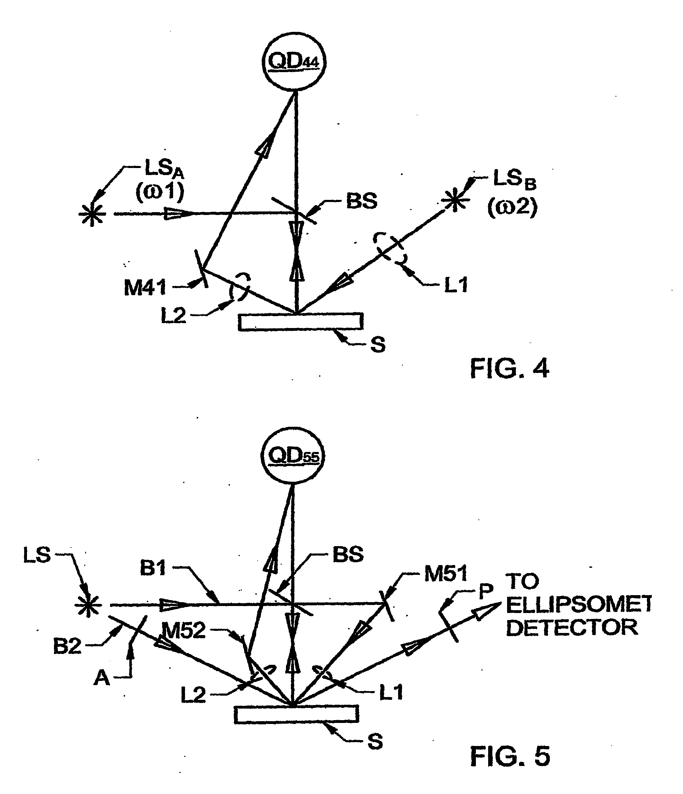

Turning now to Fig. 4, a sample alignment system embodiment comprises:
a) first (LSa) and second (LSb) source of electromagnetism;
b) a beam splitter (BS);
c) at least a first (M41) mirror;
d) an alignment detector (QD44);
e) a stage for supporting a sample (S).

Said beam splitter (BS) is positioned to direct a portion of a beam of electromagnetism from said first source (LSa) thereof normal onto said sample (S). Said portion of said beam, after normally reflecting from said sample (S) is directed back along the path of its incidence, through said beam splitter (BS) and toward said alignment detector (QD44). Said second source provides a beam of electromagnetism which is directed to impinge on said sample (S) at an oblique angle such that it impinges thereupon at substantially the same location at which the first beam impinged, and after obliquely reflecting from said sample (S), is directed to reflect by said second mirror (M41) toward said alignment detector (QD44). Said first (LSa) and second (LSb) sources can produce electromagnetic radiation of different wavelengths and/or of different chopping frequencies which are separately distinguishable by the alignment detector (QD44).

It is noted that focusing (L1) and collimating (L2) lenses can optionally be applied.

Fig. 5 shows that a common source (LS) can be applied to provide both an ellipsometer beam and an alignment beam. This directly distinguishes over the Abraham 6,091,499 Patent and it is noted that use of the same source of electromagnetic radiation for both alignment and sample analysis avoids the problem of the alignment beam being of a wavelength which does not reflect from the sample. The same wavelengths are used in alignment as are used in ellipsometric sample analysis. Said system for orienting a sample on a stage in an ellipsometer system comprises a light source (LS), a polarizer (P), said stage, an analyzer (A) and a detector;
said system further comprises an alignment detection system with means for receiving input from said ellipsometer light source (LS), wherein said alignment detection system can detect both a tilt of a sample placed onto said stage, and a distance of said sample from said ellipsometer; and
said system further comprising an adjusting device, wherein said adjusting device can adjust tilt of said stage, and wherein said adjusting device can adjust the relative position of said ellipsometer and alignment detection system with respect to said stage.

The alignment detection system is to be considered as including embodiments shown in Figs. 3 and 4, and can further comprise two alignment detectors (QS1) (QD2) as indicated in Fig. 1 for receiving tilt and distance information, instead of the single detector (QD55) as shown.

It is noted that focusing (L1) and collimating (L2) lenses can optionally be applied.

In any of the foregoing sample alignment systems the alignment detector can be a multi-element detector, (eg. a Quad Detector), or can be a detector which comprises a two dimensional plurality of detection elements arranged in an array.

The systems just disclosed can be beneficially applied in ellipsometer systems which sequentially comprise a source of a beam of electromagnetism, polarizer means for imposing a state of polarization on said beam, a stage for supporting a sample, analyzer means for selecting polarization states of a beam of electromagnetic radiation after it interacts with a sample placed on said stage, and an ellipsometer detector.

It is further noted that the disclosed invention systems can be conveniently applied in automatic means for aligning the sample, wherein signals from the alignment detector(s) are used to control the vertical position and tilt of a sample.

It is also noted that where choppers are used, an ellipsometer arranged to provide a beam to the sample can be operated in ambient light instead of in a darkened environment. This can be an advantage in convenience.

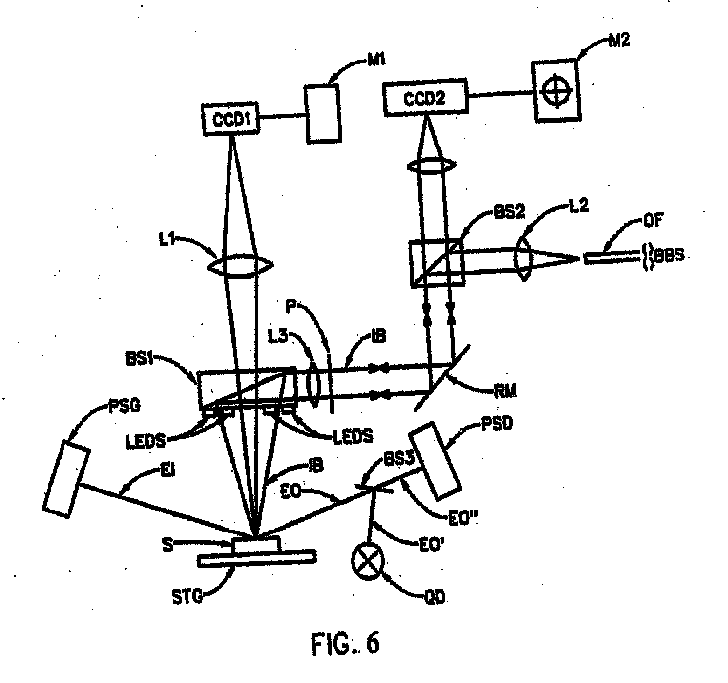

Fig. 6 is included to show a system suited to practicing a similar purpose as Claimed in other Applications by the same Inventor herein. Fig. 6 shows a system for controlling the angle of incidence at which a beam of electromagnetic radiation (EI) obliquely impinges on a monitored location of a surface of a sample (S) which is present on a sample supporting stage (STG) which can be translated in "X", "Y" and "Z" directions as well as rotated about "X", "Y" and optionally "Z" axes. Vertically, as viewed in side elevation, above said stage (STG) there is a first beam splitter means (BS1), a Zoom lens (L1) and a first camera means (CCD1) for providing a view of a portion of the surface of said sample (S), said first beam splitter (BS1) means optionally having positioned on a lower surface thereof light emitting means (LEDS) for providing light to the surface of said sample (S). Laterally with respect to said first beam splitter means (BS1) there being a reflection means (RM), and vertically above said reflection means (RM) there being a second beam splitter (BS2). Vertically above said second beam splitter (BS2) there is a second camera means (CCD2) and laterally with respect to said second beam splitter (BS2), there is sequentially a lens (L2) and an essentially point source of electromagnetic radiation which is shown as being an optical Fiber (OF) which receives electromagnetic radiation from source (BBS). Said first (CCD1) and second (CCD2) camera means each have associated therewith display means (M1) and (M2) respectively. Said system further comprises an ellipsometer polarization state generator (PSG) to cause, and a polarization stage detector (PSD) to monitor, a beam (EI) of electromagnetic radiation which in use impinges on said monitored location on said surface of said sample at an oblique angle thereto. In use said first camera means (CCD1) and its associated display means provide a view of at least a portion of the surface of a sample (S) utilizing light provided by said light emitting means (LEDS) for providing light to the surface of said sample (S) and which are positioned on said lower surface of said first beam splitter (BS1), and said essentially point source of a source of electromagnetic radiation provides electromagnetic radiation to the surface of said sample via said second beam splitter (BS2), said reflective means (R) and said first beam splitter (BS1). Said sample supporting stage (STG) is caused to be translated in any of said "X", "Y" and "Z" directions as well as rotated about said "X", "Y" and optionally "Z" axes which are necessary to cause an interrogating beam (IB) of electromagnetic radiation provided by said essentially point source, (ie. fiber optic (OF)), of a source of electromagnetic radiation to reflect from the surface of said sample (S), proceed back through said first beam splitter (BS1) means, reflect from said reflective means (R), pass through said second beam splitter means (BS2), enter said second camera means (CCD2) and cause an image on the display means (M2) associated therewith which indicates that the monitored location on the sample (S) surface is oriented so as to face substantially vertically. The purpose is to align said sample (S) surface to assure that said beam of electromagnetic radiation (EI) provided to said monitored location on the surface of said sample (S) at an oblique angle approaches said surface at a known intended angle of incidence thereto at the exact point of impingement, rather than at an angle of incidence which is modified by surface irregularities.

A problem can develop in that an interrogation beam spot can appear in the image of the first camera means (CCD1) display (M1) as part of the interrogation beam can proceed through said first beam splitter (BS1) thereinto. As a solution to this problem, said system can further provide that a polarizer means (P) be placed into the path of said interrogation beam (IB) of electromagnetic radiation provided by said essentially point source of a source of electromagnetic radiation, and in which said first beam splitter (BS1) is sensitive to polarization state. The polarizer means (P) is preferable adjustable to enable changing the direction of imposed polarization. This can be beneficial where, for instance, the sample (S) has an effect on the reflected interrogation beam (IB) polarization state, and/or where it is determined desirable to allow some of said interrogation beam to reach the first camera means (CCD1), (eg. where it is found to aid with sample surface alignment).

Note that the ellipsometer system is shown to contain a Beam Splitter (BS3) and a Quad Detector (QD). Output Beam (EO) is caused partially to enter the (PSD) as (EO'') and partially enter (QD) as (EO') thereby. "X" and "Y" translation of the sample (S) which cause the (AOI) of Input Beam (EI) to reflect from said Sample (S) at various (AOI) and (POI) angles show up at the (QD). When a Sample (S) is aligned so that a normal to its surface is directed vertically in the Laboratory Frame of Reference at the location of the Ellipsometer Beam (EI) impingement thereupon small "X" and/or "Y" translations have essentially no effect on the (QD) outputs. The ellipsometer Alignment means, (ie. (BS3) and (QD)), are then utilized in the alignment procedure. Note the terminology Angle-Of-Incidence refers to the angle between the locus of a beam of electromagnetic radiation and a normal to a surface of a sample, and the terminology Plane-Of-Incidence refers to the plane formed by the Laboratory Normal the normal to the surface of the sample at and the locus of a beam of electromagnetic radiation at a location thereupon being investigated.

Finally, Fig. 6 is included as it provides a diagram of an ellipsometer/polarimeter. Note that the identifier (PSG) denotes a Polarization State Generator comprising a source of a beam of electromagnetism, polarizer means for imposing a state of polarization on said beam, and optionally a compensator means for changing phase between orthogonal components of a polarized beam of electromagnetism. Also, the identifer (PSD) denotes a Polarization State Detector comprising analyzer means for selecting polarization states of a beam of electromagnetic radiation after it interacts with a specific location on a sample placed on a stage, and an ellipsometer detector. Again optionally a compensator means can be included. Fig. 6 is to be understood to be demonstrative and that the other sample alignment systems in Figs. 1 - 5 can be substituted for that specifically shown in Fig. 6.

Having hereby disclosed the subject matter of the present invention, it should be obvious that many modifications, substitutions, and variations of the present invention are possible in view of the teachings. It is therefore to be understood that the invention may be practiced other than as specifically described, and should be limited in its breadth and scope only by the Claims.

## Claims

1. A system for investigating a sample with electromagnetic radiation comprising:
a) an ellipsometer, polarimeter or spectrophotometer system which sequentially comprises a source of a beam of electromagnetic radiation and polarizer means for imposing a state of polarization on said beam (PSG), a stage for supporting a sample, analyzer means for selecting polarization states of a beam of electromagnetic radiation after it interacts with a specific location on a sample placed on said stage, and an ellipsometer detector (PSD), such that in use a beam of electromagnetic radiation provided by said source of a beam of electromagnetic radiation is caused to pass through said polarizer means, interact with a sample placed on said stage for supporting a sample, pass through said analyzer means and enter said ellipsometer detector, followed by the analyzing thereof; and,
b) a sample alignment system which provides that electromagnetic radiation produced thereby is caused to impinge on substantially the same point on said sample as does the ellipsometer beam; the sample alignment system comprising:
i) a source of electromagnetic radiation (LS);
ii) a beam splitter (BS);
iii) a first mirror (M21, M31);
iv) an alignment detector (QD22, QD33);
wherein;
said beam splitter (BS) is positioned to direct:
a first portion of a beam of electromagnetic radiation from said source (LS) thereof normal onto said sample (S) and;
a second portion thereof toward said first mirror (M21, M31) which reflects it onto said sample (S) at an oblique angle such that it impinges thereupon at substantially the same location at which the first portion of said beam impinges;
such that when said sample is tilt aligned said first portion of said beam, after normally reflecting from said sample, is directed back along the path of its incidence, through said beam splitter (BS) and toward said alignment detector (QD22, QD33); **characterised in that:**
in use, output from the said alignment detector is used to effect vertical height and tilt alignment of the sample, and with the sample aligned, ellipsometric data is obtained from the ellipsometer detector: and,
wherein the sample alignment system further comprises:
v) a second (M22, M32) mirror; wherein said second portion of said beam, after obliquely reflecting from said sample (S), is directed to reflect from said second mirror (M22, M32) toward said alignment detector (QD22, QD33) when said sample is height aligned; and,
vi) at least one of:
A) first and second shutters (S1) and (S2);
wherein said first shutter (S1) being in the pathway of said first beam portion, and said second shutter (S2) being in the pathway of said second beam portion;
such that in use said shutters (S1) (S2) are operated to sequentially allow entry into said alignment detector (QD22) of electromagnetic radiation:
I) normally reflected from said sample (S) and directed back along the path of its incidence, through said beam splitter (BS) and toward said alignment detector (QD22); and
II) obliquely reflected from said second mirror (M22) toward said alignment detector (QD22);
or,
B) electromagnetic radiation intensity modulation means present in the pathway of at least one of the first and second portions of the said beam.

2. A system as claimed in claim 1 wherein the sample alignment system is automated and comprises means for receiving input from the alignment detector and automatically effecting sample vertical height and tilt alignment, and using of output from said alignment detector to automatically effect vertical height and tilt alignment of the sample.

3. A system as claimed in claim 1, wherein the intensity modulation means comprises a first chopper (CHP1) and a second chopper (CHP2);
said first chopper (CHP1) being in the pathway of said first portion of the beam, and said second chopper (CHP2) being in the pathway of said second portion of the beam;
such that in use said choppers (CHP1) and (CHP2) are operated at different frequencies which are distinguishable by the alignment detector (QD33).

4. A system for investigating a sample with electromagnetic radiation comprising:
a) an ellipsometer polarimeter or spectrophotometer system which sequentially comprises a source of a beam of electromagnetic radiation and polarizer means for imposing a state of polarization on said beam (PSG), a stage for supporting a sample, analyzer means for selecting polarization states of a beam of electromagnetic radiation after it interacts with a specific location on a sample placed on said stage, and an ellipsometer detector (PSD), such that in use a beam of electromagnet radiation provided by said source of a beam of electromagnetic radiation is caused to pass through said polarizer means, interact with a sample placed on said stage for supporting a sample, pass through said analyzer means and enter said ellipsometer detector, followed by the analyzing thereof; and
b) a sample alignment system which provides that electromagnetic radiation produced thereby is caused to impinge on substantially the same point on said sample as does the ellipsometer beam; the sample alignment system comprising:
i. a first (LSa) source of electromagnetic radiation;
ii. a beam splitter (BS);
iii. a (M41) mirror;
iv. an alignment detector (QD44);
said beam splitter (BS) being positioned to direct a portion of a first beam of electromagnetic radiation from said first source (LSa) thereof normal onto said sample (S), such that when said sample is tilt aligned, said portion of said beam, after normally reflecting from said sample (S) is directed back along the path of its incidence, through said beam splitter (BS) and toward said alignment detector (QD44);
**characterising in that:**
the alignment system further comprises:
v. a second (LSb) source of electromagnetic radiation;
where, in use, output from the said alignment detector is used to effect vertical height and tilt alignment of the sample, and
with the sample aligned, ellipsometric data is obtained from the ellipsometer detector;
wherein said second source provides a second beam of electromagnetic radiation which is directed to impinge on said sample (S) at an oblique angle such that it impinges thereupon at substantially the same location at which the first beam impinged,
and after obliquely reflecting from said sample (S), being directed to reflect from said mirror (M41) toward said alignment detector (QD44) when said sample is height aligned;
said first (LSa) and second (LSb) sources producing electromagnetic radiation of different wavelengths and/or of different chopping frequencies, which are distinguishable by the alignment detector (QD44).

5. A system as claimed in any of claims 1-3 further comprising a focusing (L1) lens and collimating (L2) lens; and,
wherein said lenses (L1, L2) are positioned such that:
A) said first mirror (M1), reflects said second portion of said beam through said focusing lens (L1) and obliquely onto said sample (S); and,
B) said second portion of said beam being is reflected from said sample (S), through said collimating lens (L2) and into said first alignment detector (QD1).

6. A system as claimed in any preceding claim, further comprising an adjusting device, wherein said adjusting device can adjust tilt of said stage, and wherein said adjusting device can adjust the relative position of said ellipsometer and alignment detection system with respect to said stage.

7. A system as claimed in claim 5, wherein the said system is **characterized in that** the length of the path of the electromagnetic radiation which impinges on said sample (s) at an oblique angle of incidence, between said collimating lens (L1) and said detector (QD22, QD33) to which it is directed is at least two times longer than the length of the path of said electromagnetic radiation between said sample and said collimating lens.

8. A system as claimed in claim 1 in which the electromagnetic radiation which is caused to approach said sample along both the normal and oblique angles of incidence is provided from a single source of electromagnetic radiation.

9. A method of investigating a sample comprising the following steps whereby steps a and b are practiced in either order:
a) providing an ellipsometer, polarimeter or spectrophotometer system which sequentially comprises a source of a beam of electromagnetic radiation and polarizer means for imposing a state of polarization of said beam (PSG), a stage for supporting a sample, analyzer means for selecting polarization states of a beam of electromagnetic radiation after it interacts with a specific location on a sample placed on said stage, and an ellipsometer detector (PSD);
b) providing a sample alignment system which provides that electromagnetic radiation produced thereby is caused to impinge on substantially the same point on said sample as does the ellipsometer beam;
the sample alignment system comprising:
i) a source of electromagnetic radiation (LS);
ii) a beam splitter (BS);
iii) a first mirror (M21, M31);
iv) an alignment detector (QD22, QD33);
said beam splitter (BS) is positioned to direct:
a first portion of a beam of electromagnetic radiation from said source (LS) thereof normal onto said sample (S) and;
a second portion thereof toward said first mirror (M21, M31) which reflects it onto said sample (S) at an oblique angle such that it impinges thereupon at substantially the same location at which the first portion of said beam impinges;
such that when said sample is tilt aligned, said first portion of said beam, after normally reflecting from said sample, is directed back along the path of its incidence, through said beam splitter (BS) and toward said alignment detector (QD22, QD33);
c) using output from said alignment detector provided in step b to effect vertical height alignment of the sample;
d) obtaining ellipsometric data from the ellipsometer detector;
e) analysing said ellipsometer system data;
**characterised in that:**
in use, output from the said alignment detector is used to effect vertical height and tilt alignment of the sample, and with the sample aligned, ellipsometric data is obtained from the ellipsometer detector: and,
the method further compising the steps of
f) providing the sample alignment system with a second (M22, M32) mirror; wherein said second portion of said beam, after obliquely reflecting from said sample (S), is directed to reflect from said second mirror (M22, M32) toward said alignment detector (QD22, QD33) when said sample is height aligned; and,
g) providing at least one of:
A) first and second shutters (S1) and (S2);
wherein said first shutter (S1) being in the pathway of said first beam portion, and said second shutter (S2) being in the pathway of said second beam portion;
such that in use said shutters (S1) (S2) are operated to sequentially allow entry into said alignment detector (QD22) of electromagnetic radiation:
I) normally reflected from said sample (S) and directed back along the path of its incidence, through said beam splitter (BS) and toward said alignment detector (QD22); and
II) obliquely reflected from said second mirror (M22) toward said alignment detector (QD22);
or,
B) electromagnetic radiation intensity modulation means present in the pathway of at least one of the first and second portions of the said beam.

10. A method as claimed in claim 9 which further comprises, in step b, providing an automatic alignment system which comprises means for receiving input from the alignment detector and automatically effecting sample vertical height and tilt alignment, and in step c the using of output from said alignment detector to automatically effect vertical height and tilt alignment of the sample (S).

11. A method as claimed in claim 9, wherein the intensity modulation means comprises a first chopper (CHP1) and a second chopper (CHP2); the method comprising the steps of
I) positioning said first chopper (CHP1) in the pathway of said first portion of the beam, and said second chopper (CHP2) in the pathway of said second portion of the beam;
II) operating said choppers (CHP1) and (CHP2) at different frequencies which are distinguishable by the alignment detector (QD33).

12. A method of investigating a sample comprising the following steps whereby steps a and b are practiced in either order:
a) providing an ellipsometer, polarimeter or spectrophotometer system which sequentially comprises a source of a beam of electromagnetic radiations and polarizer means for imposing a state of polarization of said beam (PSG), a stage for supporting a sample, analyzer means for selecting polarization states of a beam of electromagnetic radiation after it interacts with a specific location on a sample placed on said stage, and an ellipsometer detector (PSD);
b) providing a sample alignment system which provides that electromagnetic radiation produced thereby is caused to impinge on substantially the same point on said sample as does the ellipsometer beam;
the sample alignment system comprising:
i) a first source of electromagnetic radiation (LSA);
ii) a beam splitter (BS);
iii) a mirror (M41);
iv) an alignment detector (QD44);
said beam splitter (BS) is positioned to direct:
a portion of a first beam of electromagnetic radiation from said source (LSA) thereof normal onto said sample (S) and;
such that when said sample is tilt aligned, said portion of said first beam, after normally reflecting from said sample, is directed back along the path of its incidence, through said beam splitter (BS) and toward said alignment detector (QD22);
c) using output from said alignment detector provided in step b to effect vertical height alignment of the sample;
d) obtaining ellipsometric data from the ellipsometer detector;
e) analysing said ellipsometer system data;
**characterised in that:**
the method further comprising the step of:
f) providing the alignment system with a second (LSb) source of electromagnetic radiation;
wherein said second source provides a second beam of electromagnetic radiation directed to impinge on said sample (S) at an oblique angle such that it impinges thereupon at substantially the same location at which the first beam impinged, and after obliquely reflecting from said sample (S), being directed to reflect from said mirror (M41) toward said alignment detector (QD44) when said sample is height aligned;
said first (LSa) and second (LSb) sources producing electromagnetic radiation of different wavelengths and/or of different frequencies, which are distinguishable by the alignment detector (QD44);
where, in use, output from the said alignment detector is used to effect vertical height and tilt alignment of the sample, and with the sample aligned, ellipsometric data is obtained from the ellipsometer detector.

13. A method as claimed in claims 9 or 12, further comprising the step of providing an adjusting device, wherein said adjusting device can adjust tilt of said stage, and wherein said adjusting device can adjust the relative position of said ellipsometer and alignment detection system with respect to said stage.

## Patentansprüche

1. System zum Untersuchen einer Probe mit elektromagnetischer Strahlung, umfassend:
a) ein Ellipsometer-, Polarimeter- oder Spektrophotometersystem, das der Reihe nach eine Strahlenquelle einer elektromagnetischen Strahlung und ein Polarisierungsmittel, das den Strahl (PSG) in einen Polarisierungszustand versetzt, eine Plattform zum Tragen einer Probe, ein Analysiermittel zum Auswählen von Polarisierungszuständen eines Strahls elektromagnetischer Strahlung nach seiner Interaktion mit einer bestimmten Stelle auf einer Probe, die auf der Plattform liegt, und einen Ellipsometerdetektor (PSD) umfasst, so dass in Gebrauch ein Strahl elektromagnetischer Strahlung, der von der Strahlenquelle einer elektromagnetischen Strahlung bereitgestellt wird, veranlasst wird, durch das Polarisierungsmittel zu gehen, mit der Probe, die auf der Plattform zum Tragen einer Probe liegt, zu interagieren, durch das Analysiermittel zu gehen und in den Ellipsometerdetektor einzutreten, wonach er analysiert wird; und
b) ein Probenausrichtungssystem, das vorsieht, dass dadurch erzeugte elektromagnetische Strahlung veranlasst wird, auf im Wesentlichen denselben Punkt auf der Probe zu fallen, wie der Ellipsometerstrahl; wobei das Probenausrichtungssystem umfasst:
i) eine Quelle elektromagnetischer Strahlung (LS);
ii) einen Strahlteiler (BS);
iii) einen ersten Spiegel (M21, M31);
iv) einen Ausrichtungsdetektor (QD22; QD33);
wobei;
der Strahlteiler (BS) so positioniert ist, dass er:
einen ersten Teil eines Strahls elektromagnetischer Strahlung von seiner Quelle (LS) normal auf die Probe (S) lenkt und;
einen zweiten Teil davon zum ersten Spiegel (M21, M31) lenkt, der ihn in einem schrägen Winkel auf die Probe (S) reflektiert, so dass er auf diese im Wesentlichen an derselben Stelle fällt, an der der erste Teil des Strahls auftrifft;
so dass, wenn die Probe geneigt ausgerichtet ist, der erste Teil des Strahls, nachdem er normal von der Probe reflektiert wurde, entlang seines Einfallspfades durch den Strahlteiler (BS) und zum Ausrichtungsdetektor (QD22, QD33) zurück gelenkt wird;
**dadurch gekennzeichnet dass**:
in Gebrauch der Ausgang von dem Ausrichtungsdetektor verwendet wird, um eine vertikale Höhen- und Neigungssaurichtung der Probe zu erzielen, und mit ausgerichteter Probe ellipsometrische Daten vom Ellipsometerdetektor erhalten werden; und
wobei das Probenausrichtungssystem des Weiteren umfasst:
v) einen zweiten (M22, M32) Spiegel; wobei der zweite Teil des Strahls, nachdem er schräg von der Probe (S) reflektiert wurde, so gelenkt wird, dass er von dem zweiten Spiegel (M22, M33) zum Ausrichtungsdetektor (QD22, QD33) reflektiert wird, wenn die Probe in der Höhe ausgerichtet ist; und
vi) mindestens eines von:
A) einer ersten und zweiten Blende (S1) und (S2);
wobei die erste Blende (S1) im Pfad des ersten Strahlteils liegt und die zweite Blende (S2) im Pfad des zweiten Strahlteils liegt;
so dass in Gebrauch die Blenden (S1) (S2) so betrieben werden, dass sie der Reihe nach einen Eintritt von elektromagnetischer Strahlung in den Ausrichtungsdetektor (QD22) ermöglichen, die:
I) normal von der Probe (S) reflektiert und den Einfallspfad durch den Strahlteiler (BS) und zum Ausrichtungsdetektor (QD22) zurück gelenkt wird; und
II) schräg vom zweiten Spiegel (M22) zum Ausrichtungsdetektor (QD22) reflektiert wird;
oder
B) einem elektromagnetischen Strahlungsstärkenmodulationsmittel, das im Pfad mindestens eines von dem ersten und zweiten Teil des Strahls vorhanden ist.

2. System nach Anspruch 1, wobei das Probenausrichtungssystem automatisiert ist und Mittel zum Empfangen eines Eingangs von dem Ausrichtungsdetektor und zum automatischen Ausführen der vertikalen Höhen- und Neigungsausrichtung der Probe umfasst und einen Ausgang von dem Ausrichtungsdetektor zum automatischen Ausführen einer vertikalen Höhen- und Neigungsausrichtung der Probe verwendet.

3. System nach Anspruch 1, wobei das Stärkenmodulationsmittel einen ersten Zerhacker (CHP1) und einen zweiten Zerhacker (CHP2) umfasst;
wobei der erste Zerhacker (CHP1) im Pfad des ersten Teils des Strahls liegt und der zweite Zerhacker (CHP2) im Pfad des zweiten Teils des Strahls liegt;
so dass in Gebrauch die Zerhacker (CHP1) und (CHP2) bei unterschiedlichen Frequenzen betrieben werden, die vom Ausrichtungsdetektor (QD33) unterschieden werden können.

4. System zum Untersuchen einer Probe mit elektromagnetischer Strahlung, umfassend:
a) ein Ellipsometer-, Polarimeter- oder Spektrophotometersystem, das der Reihe nach eine Strahlenquelle einer elektromagnetischen Strahlung und ein Polarisierungsmittel, das den Strahl (PSG) in einen Polarisierungszustand versetzt, eine Plattform zum Tragen einer Probe, ein Analysiermittel zum Auswählen von Polarisierungszuständen eines Strahls elektromagnetischer Strahlung nach seiner Interaktion mit einer bestimmten Stelle auf einer Probe, die auf der Plattform liegt, und einen Ellipsometerdetektor (PSD) umfasst, so dass in Gebrauch ein Strahl elektromagnetischer Strahlung, der von der Strahlenquelle einer elektromagnetischen Strahlung bereitgestellt wird, veranlasst wird, durch das Polarisierungsmittel zu gehen, mit der Probe, die auf der Plattform zum Tragen einer Probe liegt, zu interagieren, durch das Analysiermittel zu gehen und in den Ellipsometerdetektor einzutreten, wonach er analysiert wird; und
b) ein Probenausrichtungssystem, das vorsieht, dass dadurch erzeugte elektromagnetische Strahlung veranlasst wird, auf im Wesentlichen denselben Punkt auf der Probe zu fallen, wie der Ellipsometerstrahl; wobei das Probenausrichtungssystem umfasst:
i. eine erste (LSa) Quelle elektromagnetischer Strahlung;
ii. einen Strahlteiler (BS);
iii. einen Spiegel (M41);
iv. einen Ausrichtungsdetektor (QD44);
wobei der Strahlteiler (BS) zum Lenken eines Teils eines ersten Strahls elektromagnetischer Strahlung von der ersten Quelle (LSa) normal auf die Probe (S) positioniert ist, so dass, wenn die Probe geneigt ausgerichtet ist, der Teil des ersten Strahls, nachdem er normal von der Probe (S) reflektiert wurde, entlang seines Einfallspfades durch den Strahlteiler (BS) und zum Ausrichtungsdetektor (QD44) zurück gelenkt wird;
**dadurch gekennzeichnet dass**:
das Ausrichtungssystem des Weiteren umfasst:
v. eine zweite (LSb) Quelle elektromagnetischer Strahlung;
wobei in Gebrauch der Ausgang von dem Ausrichtungsdetektor verwendet wird, um eine vertikale Höhen- und Neigungssaurichtung der Probe zu erzielen, und mit ausgerichteter Probe ellipsometrische Daten vom Ellipsometerdetektor erhalten werden;
wobei die zweite Quelle einen zweiten Strahl elektromagnetischer Strahl bereitstellt, der so gelenkt wird, dass er auf die Probe (S) in einem schrägen Winkel fällt, so dass er auf diese an im Wesentlichen derselben Stelle fällt, auf die der erste Strahl fällt, und nach einer schrägen Reflexion von der Probe (S) so gelenkt wird, dass er vom Spiegel (M41) zum Ausrichtungsdetektor (QD44) reflektiert wird, wenn die Probe in der Höhe ausgerichtet ist;
wobei die erste (LSa) und zweite (LSb) Quelle elektromagnetische Strahlung unterschiedlicher Wellenlängen und/oder unterschiedlicher Taktfrequenzen erzeugen, die vom Ausrichtungsdetektor (QD44) unterschieden werden können.

5. System nach einem der Ansprüche 1-3, des Weiteren umfassend eine Fokussierungslinse (L1) und eine Kollimatorlinse (L2); und
wobei die Linsen (L1, L2) so positioniert sind, dass:
A) der erste Spiegel (M1) den zweiten Teil des Strahls durch die Fokussierungslinse (L1) und schräg auf die Probe (S) reflektiert; und
B) der zweite Teil des Strahls von der Probe (S) durch die Kollimatorlinse (L2) und in den ersten Ausrichtungsdetektor (QD1) reflektiert wird.

6. System nach einem vorangehenden Anspruch, des Weiteren umfassend eine Justiervorrichtung, wobei die Justiervorrichtung eine Neigung der Plattform einstellen kann und wobei die Justiervorrichtung die relative Position des Ellipsometer- und Ausrichtungsdetektionssystems in Bezug auf die Plattform einstellen kann.

7. System nach Anspruch 5, wobei das System **dadurch gekennzeichnet ist, dass** die Länge des Pfades der elektromagnetischen Strahlung, die auf die Probe (S) in einem schrägen Einfallswinkel fällt, zwischen der Kollimatorlinse (L2) und dem Detektor (QD22, QD33), zu dem sie gelenkt wird, mindestens zweimal länger als die Länge des Pfades der elektromagnetischen Strahlung zwischen der Probe und der Kollimatorlinse ist.

8. System nach Anspruch 1, wobei die elektromagnetische Strahlung, die veranlasst wird, sich der Probe entlang sowohl des normalen wie auch schrägen Einfallswinkels zu nähern, von einer einzigen Quelle elektromagnetischer Strahlung bereitgestellt wird.

9. Verfahren zum Untersuchen einer Probe, umfassend die folgenden Schritte, wobei Schritte a und b in beliebiger Reihenfolge ausgeführt werden:
a) Bereitstellen eines Ellipsometer-, Polarimeter- oder Spektrophotometersystems, das der Reihe nach eine Strahlenquelle einer elektromagnetischen Strahlung und ein Polarisierungsmittel, das den Strahl (PSG) in einen Polarisierungszustand versetzt, eine Plattform zum Tragen einer Probe, ein Analysiermittel zum Auswählen von Polarisierungszuständen eines Strahls elektromagnetischer Strahlung nach seiner Interaktion mit einer bestimmten Stelle auf einer Probe, die auf der Plattform liegt, und einen Ellipsometerdetektor (PSD) umfasst;
b) Bereitstellen eines Probenausrichtungssystems, das vorsieht, dass dadurch erzeugte elektromagnetische Strahlung veranlasst wird, auf im Wesentlichen denselben Punkt auf der Probe zu fallen, wie der Ellipsometerstrahl;
wobei das Probenausrichtungssystem umfasst:
i) eine Quelle elektromagnetischer Strahlung (LS);
ii) einen Strahlteiler (BS);
iii) einen ersten Spiegel (M21, M31);
iv) einen Ausrichtungsdetektor (QD22; QD33);
der Strahlteiler (BS) so positioniert ist, dass er:
einen ersten Teil eines Strahls elektromagnetischer Strahlung von seiner Quelle (LS) normal auf die Probe (S) lenkt und;
einen zweiten Teil davon zum ersten Spiegel (M21, M31) lenkt, der ihn in einem schrägen Winkel auf die Probe (S) reflektiert, so dass er auf diese im Wesentlichen an derselben Stelle fällt, an der der erste Teil des Strahls auftrifft;
so dass, wenn die Probe geneigt ausgerichtet ist, der erste Teil des Strahls, nachdem er normal von der Probe reflektiert wurde, entlang seines Einfallspfades durch den Strahlteiler (BS) und zum Ausrichtungsdetektor (QD22, QD33) zurück gelenkt wird;
c) Verwenden eines Ausgangs von dem Ausrichtungsdetektor, der in Schritt b bereitgestellt wird, um eine vertikale Höhenausrichtung der Probe zu erzielen;
d) Erhalten ellipsometrischer Daten vom Ellipsometerdetektor;
e) Analysieren der Ellipsometersystemdaten;
**dadurch gekennzeichnet, dass**:
in Gebrauch der Ausgang von dem Ausrichtungsdetektor verwendet wird, um eine vertikale Höhen- und Neigungssaurichtung der Probe zu erzielen, und mit ausgerichteter Probe ellipsometrische Daten vom Ellipsometerdetektor erhalten werden; und
wobei das Verfahren des Weiteren folgende Schritte umfasst
f) Versehen des Probenausrichtungssystems mit einem zweiten (M22, M32) Spiegel; wobei der zweite Teil des Strahls, nachdem er schräg von der Probe (S) reflektiert wurde, so gelenkt wird, dass er von dem zweiten Spiegel (M22, M33) zum Ausrichtungsdetektor (QD22, QD33) reflektiert wird, wenn die Probe in der Höhe ausgerichtet ist; und
g) Bereitstellen mindestens eines von:
A) einer ersten und zweiten Blende (S1) und (S2);
wobei die erste Blende (S1) im Pfad des ersten Strahlteils liegt und die zweite Blende (S2) im Pfad des zweiten Strahlteils liegt;
so dass in Gebrauch die Blenden (S1) (S2) so betrieben werden, dass sie der Reihe nach einen Eintritt der elektromagnetischen Strahlung in den Ausrichtungsdetektor (QD22) ermöglichen, die:
I) normal von der Probe (S) reflektiert und den Einfallspfad durch den Strahlteiler (BS) und zum Ausrichtungsdetektor (QD22) zurück gelenkt wird; und
II) schräg vom zweiten Spiegel (M22) zum Ausrichtungsdetektor (QD22) reflektiert wird;
Oder
B) einem elektromagnetischen Strahlungsstärkenmodulationsmittel, das im Pfad mindestens eines von dem ersten und zweiten Teil des Strahls vorhanden ist.

10. Verfahren nach Anspruch 9, das des Weiteren in Schritt b das Bereitstellen eines automatischen Ausrichtungssystems umfasst, das Mittel zum Empfangen eines Eingangs von dem Ausrichtungsdetektor und zum automatischen Ausführen der vertikalen Höhen- und Neigungsausrichtung der Probe umfasst, und in Schritt c das Verwenden eines Ausgangs von dem Ausrichtungsdetektor zum automatischen Ausführen einer vertikalen Höhen- und Neigungsausrichtung der Probe (S).

11. Verfahren nach Anspruch 9, wobei das Stärkenmodulationsmittel einen ersten Zerhacker (CHP1) und einen zweiten Zerhacker (CHP2) umfasst; wobei das Verfahren folgende Schritte umfasst
I) Positionieren des ersten Zerhackers (CHP1) im Pfad des ersten Teils des Strahls des zweiten Zerhackers (CHP2) im Pfad des zweiten Teils des Strahls;
II) Betreiben der Zerhacker (CHP1) und (CHP2) bei unterschiedlichen Frequenzen, die vom Ausrichtungsdetektor (QD33) unterschieden werden können.

12. Verfahren zum Untersuchen einer Probe, umfassend die folgenden Schritte, wobei Schritte a und b in beliebiger Reihenfolge ausgeführt werden:
a) Bereitstellen eines Ellipsometer-, Polarimeter- oder Spektrophotometersystems, das der Reihe nach eine Strahlenquelle einer elektromagnetischen Strahlung und ein Polarisierungsmittel, das den Strahl (PSG) in einen Polarisierungszustand versetzt, eine Plattform zum Tragen einer Probe, ein Analysiermittel zum Auswählen von Polarisierungszuständen eines Strahls elektromagnetischer Strahlung nach seiner Interaktion mit einer bestimmten Stelle auf einer Probe, die auf der Plattform liegt, und einen Ellipsometerdetektor (PSD) umfasst;
b) Bereitstellen eines Probenausrichtungssystems, das vorsieht, dass dadurch erzeugte elektromagnetische Strahlung veranlasst wird, auf im Wesentlichen denselben Punkt auf der Probe zu fallen, wie der Ellipsometerstrahl;
wobei das Probenausrichtungssystem umfasst:
i) eine erste Quelle elektromagnetischer Strahlung (LSA);
ii) einen Strahlteiler (BS);
iii) einen Spiegel (M41);
iv) einen Ausrichtungsdetektor (QD44);
wobei der Strahlteiler (BS) so positioniert ist, dass er:
einen Teil eines ersten Strahls elektromagnetischer Strahlung von der ersten Quelle (LSA) normal auf die Probe (S) lenkt; und
so dass, wenn die Probe geneigt ausgerichtet ist, der Teil des ersten Strahls, nachdem er normal von der Probe reflektiert wurde, entlang seines Einfallspfades durch den Strahlteiler (BS) und zum Ausrichtungsdetektor (QD22) zurück gelenkt wird;
c) Verwenden eines Ausgangs von dem Ausrichtungsdetektor, der in Schritt b bereitgestellt wird, um eine vertikale Höhenausrichtung der Probe zu erzielen;
d) Erhalten ellipsometrischer Daten vom Ellipsometerdetektor;
e) Analysieren der Ellipsometersystemdaten;
**dadurch gekennzeichnet, dass**:
das Verfahren des Weiteren den folgenden Schritt umfasst:
f) Versehen des Ausrichtungssystems mit einer zweiten (LSb) Quelle elektromagnetischer Strahlung;
wobei die zweite Quelle einen zweiten Strahl elektromagnetischer Strahl bereitstellt, der so gelenkt wird, dass er auf die Probe (S) in einem schrägen Winkel fällt, so dass er auf diese an im Wesentlichen derselben Stelle fällt, auf die der erste Strahl fällt, und nach einer schrägen Reflexion von der Probe (S) so gelenkt wird, dass er vom Spiegel (M41) zum Ausrichtungsdetektor (QD44) reflektiert wird, wenn die Probe in der Höhe ausgerichtet ist;
wobei die erste (LSa) und zweite (LSb) Quelle elektromagnetische Strahlung unterschiedlicher Wellenlängen und/oder unterschiedlicher Taktfrequenzen erzeugen, die vom Ausrichtungsdetektor (QD44) unterschieden werden können;
wobei in Gebrauch der Ausgang von dem Ausrichtungsdetektor verwendet wird, um eine vertikale Höhen- und Neigungssaurichtung der Probe zu erzielen, und mit ausgerichteter Probe ellipsometrische Daten vom Ellipsometerdetektor erhalten werden.

13. Verfahren nach Anspruch 9 oder 12, des Weiteren umfassend den Schritt des Bereitstellens einer Justiervorrichtung, wobei die Justiervorrichtung eine Neigung der Plattform einstellen kann und wobei die Justiervorrichtung die relative Position des Ellipsometer- und Ausrichtungsdetektionssystems in Bezug auf die Plattform einstellen kann.

## Revendications

1. Système pour examiner un échantillon avec un rayonnement électromagnétique, comprenant :
a) un système d'ellipsomètre, de polarimètre ou de spectrophotomètre qui comprend séquentiellement une source d'un faisceau de rayonnement électromagnétique et un moyen de polariseur pour imposer un état de polarisation audit faisceau (PSG), un support pour supporter un échantillon, un moyen d'analyseur pour sélectionner des états de polarisation d'un faisceau de rayonnement électromagnétique après qu'il ait interagit avec un emplacement spécifique sur un échantillon placé sur ledit support, et un détecteur d'ellipsomètre (PSD), de sorte que lors de l'utilisation, on fait passer un faisceau de rayonnement électromagnétique, fourni par ladite source d'un faisceau de rayonnement électromagnétique, à travers ledit moyen de polariseur, le fait interagir avec un échantillon placé sur ledit support pour supporter un échantillon, le fait passer à travers ledit moyen d'analyseur et entrer dans ledit détecteur d'ellipsomètre, en analysant ensuite celui-ci ; et
b) un système d'alignement d'échantillon qui fait en sorte que le rayonnement électromagnétique produit de la sorte soit rendu incident sensiblement sur le même point sur ledit échantillon que cela est le cas pour le faisceau d'ellipsomètre ; le système d'alignement d'échantillon comprenant :
i) une source de rayonnement électromagnétique (LS) ;
ii) un séparateur de faisceau (BS);
iii) un premier miroir (M21, M31) ;
iv) un détecteur d'alignement (QD22, QD33) ;
dans lequel ;
ledit séparateur de faisceau (BS) est positionné de manière à envoyer :
une première partie d'un faisceau de rayonnement électromagnétique de ladite source (LS) de celui-ci perpendiculairement sur ledit échantillon (S) ; et
une deuxième partie de celui-ci vers ledit premier miroir (M21, M31) qui le réfléchit vers ledit échantillon (S) selon un angle oblique de manière à ce qu'il soit incident dessus sensiblement au même emplacement où la première partie dudit faisceau est incidente ;
de sorte que lorsque ledit échantillon est aligné en inclinaison, ladite première partie dudit faisceau, après avoir été réfléchie normalement par ledit échantillon, est renvoyée le long du trajet de son incidence, à travers ledit séparateur de faisceau (BS) et vers ledit détecteur d'alignement (QD22, QD33) ;
**caractérisé en ce que** :
lors de l'utilisation, la sortie dudit détecteur d'alignement est utilisée pour effectuer un alignement en hauteur verticale et en inclinaison de l'échantillon, et avec l'échantillon aligné, des données ellipsométriques étant obtenues de la part du détecteur d'ellipsomètre ; et
dans lequel le système d'alignement d'échantillon comprend par ailleurs :
v) un deuxième miroir (M22, M32) ; dans lequel ladite deuxième partie dudit faisceau, après avoir été réfléchie obliquement à partir dudit échantillon (S), est envoyée de manière à être réfléchie par ledit deuxième miroir (M22, M32) vers ledit détecteur d'alignement (QD22, QD33) lorsque ledit échantillon est aligné en hauteur ;
vi) au moins l'un parmi :
A) des premier et deuxième obturateurs (S1 et (S2) ;
ledit premier obturateur (S1) se trouvant sur la trajectoire de ladite première partie de faisceau, et ledit deuxième obturateur (S2) se trouvant sur la trajectoire de ladite deuxième partie de faisceau ;
de sorte que lors de l'utilisation, lesdits obturateurs (S1) (S2) sont actionnés de manière à permettre l'entrée séquentielle, à l'intérieur dudit détecteur d'alignement (QD22), d'un rayonnement électromagnétique :
I) réfléchi normalement par ledit échantillon (S) et renvoyé le long du trajet de son incidence, à travers ledit séparateur de faisceau (BS) et vers ledit détecteur d'alignement (QD22) ; et
II) réfléchi obliquement par ledit deuxième miroir (M22) vers ledit détecteur d'alignement (QD22) ;
ou,
B) un moyen de modulation d'intensité de rayonnement électromagnétique présent sur la trajectoire d'au moins l'une des première et deuxième parties dudit faisceau.

2. Système tel que revendiqué dans la revendication 1, dans lequel le système d'alignement d'échantillon est automatisé et comprend des moyens pour recevoir l'entrée du détecteur d'alignement et effectuer automatiquement un alignement en hauteur verticale et en inclinaison de l'échantillon, et pour utiliser la sortie dudit détecteur d'alignement afin d'effectuer automatiquement un alignement en hauteur verticale et en inclinaison de l'échantillon.

3. Système tel que revendiqué dans la revendication 1, dans lequel le moyen de modulation d'intensité comprend un premier hacheur (CHP1) et un deuxième hacheur (CHP2) ;
ledit premier hacheur (CHP1) se trouvant sur la trajectoire de ladite première partie du faisceau, et ledit deuxième hacheur (CHP2) se trouvant sur la trajectoire de ladite deuxième partie du faisceau ;
de sorte que lors de l'utilisation, lesdits hacheurs (CHP1) et (CHP2) fonctionnent à différentes fréquences pouvant être distinguées par le détecteur d'alignement (QD33).

4. Système pour examiner un échantillon avec un rayonnement électromagnétique, comprenant :
a) un système d'ellipsomètre, de polarimètre ou de spectrophotomètre comprenant séquentiellement une source d'un faisceau de rayonnement électromagnétique et un moyen de polariseur pour imposer un état de polarisation audit faisceau (PSG), un support pour supporter un échantillon, un moyen d'analyseur pour sélectionner des états de polarisation d'un faisceau de rayonnement électromagnétique après qu'il ait interagit avec un emplacement spécifique sur un échantillon placé sur ledit support, et un détecteur d'ellipsomètre (PSD), de sorte que lors de l'utilisation, on fait passer un faisceau de rayonnement électromagnétique fourni par ladite source d'un faisceau de rayonnement électromagnétique à travers ledit moyen de polariseur, le fait interagir avec un échantillon placé sur ledit support pour supporter un échantillon, le fait passer à travers ledit moyen d'analyseur et entrer dans ledit détecteur d'ellipsomètre, en analysant ensuite celui-ci ; et
b) un système d'alignement d'échantillon qui fait en sorte que le rayonnement électromagnétique produit de la sorte soit rendu incident sensiblement sur le même point sur ledit échantillon que cela est le cas pour le faisceau d'ellipsomètre ; le système d'alignement d'échantillon comprenant :
i. une première (LSa) source de rayonnement électromagnétique ;
ii. un séparateur de faisceau (BS) ;
iii. un (M41) miroir ;
iv. un détecteur d'alignement (QD44) ;
ledit séparateur de faisceau (BS) étant positionné de manière à envoyer une partie d'un premier faisceau de rayonnement électromagnétique de ladite première source (LSa) de celui-ci perpendiculairement sur ledit échantillon (S) de sorte que lorsque ledit échantillon est aligné en inclinaison, ladite partie dudit faisceau, après avoir été réfléchie normalement par ledit échantillon (S), est renvoyée le long du trajet de son incidence, à travers ledit séparateur de faisceau (BS) et vers ledit détecteur d'alignement (QD44) ;
**caractérisé en ce que** :
le système d'alignement comprend en outre :
v. une deuxième (LSb) source de rayonnement électromagnétique ;
où, lors de l'utilisation, la sortie dudit détecteur d'alignement est utilisée pour effectuer un alignement en hauteur verticale et en inclinaison de l'échantillon, et avec l'échantillon aligné, des données ellipsométriques étant obtenues de la part du détecteur d'ellipsomètre ;
dans lequel ladite deuxième source fournit un deuxième faisceau de rayonnement électromagnétique qui est envoyé de manière à être incident sur ledit échantillon (S) selon un angle oblique de sorte à être incident dessus sensiblement au même emplacement où le premier faisceau est incident, et après avoir été réfléchi obliquement à partir dudit échantillon (S), étant envoyé de manière à être réfléchi par ledit miroir (M41) vers ledit détecteur d'alignement (QD44) lorsque ledit échantillon est aligné en hauteur ;
lesdites première (LSa) et deuxième (LSb) sources produisant un rayonnement électromagnétique à différentes longueurs d'onde et/ou à différentes fréquences de hachage, lesquelles peuvent être distinguées par le détecteur d'alignement (QD44).

5. Système tel que revendiqué dans l'une quelconque des revendications 1-3, comprenant par ailleurs une lentille de focalisation (L1) et une lentille de collimation (L2) ; et
dans lequel lesdites lentilles (L1, L2) sont positionnées de manière à ce que :
A) ledit premier miroir (M1) réfléchisse ladite deuxième partie dudit faisceau à travers ladite lentille de focalisation (L1) et obliquement sur ledit échantillon (S) ; et
B) ladite deuxième partie dudit faisceau étant réfléchie à partir dudit échantillon (S), à travers ladite lentille de collimation (L2) et à l'intérieur dudit premier détecteur d'alignement (QD1).

6. Système tel que revendiqué dans l'une quelconque des revendications précédentes, comprenant par ailleurs un dispositif d'ajustement, dans lequel ledit dispositif d'ajustement peut ajuster l'inclinaison dudit support, et dans lequel ledit dispositif d'ajustement peut ajuster la position relative dudit système d'ellipsomètre et de détection d'alignement par rapport audit support.

7. Système tel que revendiqué dans la revendication 5, dans lequel ledit système se **caractérise en ce que** la longueur du trajet du rayonnement électromagnétique qui est incident sur ledit échantillon (S) selon un angle d'incidence oblique, entre ladite lentille de collimation (L1) et ledit détecteur (QD22, QD33) vers lequel il est envoyé, est au moins deux fois plus longue que la longueur du trajet dudit rayonnement électromagnétique entre ledit échantillon et ladite lentille de collimation.

8. Système tel que revendiqué dans la revendication 1, dans lequel le rayonnement électromagnétique que l'on fait se rapprocher dudit échantillon le long de l'angle d'incidence normal tout comme oblique, est fourni par une source unique de rayonnement électromagnétique.

9. Procédé pour examiner un échantillon comprenant les étapes suivantes, les étapes a et b étant réalisées dans n'importe quel ordre :
a) fourniture d'un système d'ellipsomètre, de polarimètre ou de spectrophotomètre qui comprend séquentiellement une source d'un faisceau de rayonnement électromagnétique et un moyen de polariseur pour imposer un état de polarisation dudit faisceau (PSG), un support pour supporter un échantillon, un moyen d'analyseur pour sélectionner des états de polarisation d'un faisceau de rayonnement électromagnétique après qu'il ait interagit avec un emplacement spécifique sur un échantillon placé sur ledit support, et un détecteur d'ellipsomètre (PSD) ;
b) fourniture d'un système d'alignement d'échantillon qui fait en sorte qu'un rayonnement électromagnétique produit de la sorte soit rendu incident sensiblement sur le même point sur ledit échantillon que cela est le cas pour le faisceau d'ellipsomètre ;
le système d'alignement d'échantillon comprenant :
i) une source de rayonnement électromagnétique (LS) ;
ii) un séparateur de faisceau (BS) ;
iii) un premier miroir (M21, M31) ;
iv) un détecteur d'alignement (QD22, QD33) ;
ledit séparateur de faisceau (BS) étant positionné de manière à envoyer :
une première partie d'un faisceau de rayonnement électromagnétique de ladite source (LS) de celui-ci perpendiculairement sur ledit échantillon (S) ; et
une deuxième partie de celui-ci vers ledit premier miroir (M21, M31) qui le réfléchi sur ledit échantillon (S) selon un angle oblique de manière à ce qu'il soit incident dessus sensiblement au même emplacement où la première partie dudit faisceau est incidente ;
de sorte que lorsque ledit échantillon est aligné en inclinaison, ladite première partie dudit faisceau, après avoir été réfléchie normalement par ledit échantillon, est renvoyée le long du trajet de son incidence, à travers ledit séparateur de faisceau (BS) et vers ledit détecteur d'alignement (QD22, QD33) ;
c) utilisation de la sortie dudit détecteur d'alignement fourni à l'étape b afin d'effectuer un alignement en hauteur verticale de l'échantillon ;
d) obtention de données ellipsométriques de la part du détecteur d'ellipsomètre ;
e) analyse desdites données de système d'ellipsomètre ;
**caractérisé en ce que** :
lors de l'utilisation, la sortie dudit détecteur d'alignement est utilisée pour effectuer un alignement en hauteur verticale et en inclinaison de l'échantillon, et avec l'échantillon aligné, des données ellipsométriques étant obtenues de la part du détecteur d'ellipsomètre ; et
le procédé comprenant en outre les étapes consistant à
f) munir le système d'alignement d'échantillon d'un deuxième miroir (M22, M32) ; dans lequel ladite deuxième partie dudit faisceau, après avoir été réfléchie obliquement par ledit échantillon (S), est envoyée de manière à être réfléchie par ledit deuxième miroir (M22, M32) vers ledit détecteur d'alignement (QD22, QD33) lorsque ledit échantillon est aligné en hauteur ; et
g) fourniture d'au moins l'un parmi :
A) des premier et deuxième obturateurs (S1) et (S2) ;
dans lequel ledit premier obturateur (S1) se trouve sur la trajectoire de ladite première partie de faisceau, et ledit deuxième obturateur (S2) se trouvant sur la trajectoire de ladite deuxième partie de faisceau ;
de sorte que lors de l'utilisation, lesdits obturateurs (S1) et (S2) sont actionnés de manière à permettre séquentiellement l'entrée, à l'intérieur dudit détecteur d'alignement (QD22), d'un rayonnement électromagnétique :
I) réfléchi normalement par ledit échantillon (S) et renvoyé le long du trajet de son incidence, à travers ledit séparateur de faisceau (BS) et vers ledit détecteur d'alignement (QD22) ; et
II) réfléchi obliquement par ledit deuxième miroir (M22) vers ledit détecteur d'alignement (QD22) ;
ou
B) un moyen de modulation d'intensité de rayonnement électromagnétique présent sur la trajectoire d'au moins l'une des première et deuxième parties dudit faisceau.

10. Procédé tel que revendiqué dans la revendication 9, lequel comprend en outre, à l'étape b), la fourniture d'un système d'alignement automatique qui comprend des moyens pour recevoir l'entrée du détecteur d'alignement et effectuer automatiquement un alignement d'échantillon en hauteur verticale et en inclinaison, et à l'étape c, l'utilisation d'une sortie dudit détecteur d'alignement afin d'effectuer automatiquement un alignement en hauteur verticale et en inclinaison de l'échantillon (S).

11. Procédé tel que revendiqué dans la revendication 9, dans lequel le moyen de modulation d'intensité comprend un premier hacheur (CHP1) et un deuxième hacheur (CHP2) ; le procédé comprenant les étapes suivantes :
I) positionnement dudit premier hacheur (CHP1) sur la trajectoire de ladite première partie du faisceau, et dudit deuxième hacheur (CHP2) sur la trajectoire de ladite deuxième partie du faisceau ;
II) commande desdits hacheurs (CHP1) et (CHP2) à différentes fréquences qui peuvent être distinguées par le détecteur d'alignement (QD33).

12. Procédé pour examiner un échantillon comprenant les étapes suivantes, les étapes a et b étant réalisées dans n'importe quel ordre :
a) fourniture d'un système d'ellipsomètre, de polarimètre ou de spectrophotomètre qui comprend séquentiellement une source d'un faisceau de rayonnements électromagnétiques et un moyen de polariseur pour imposer un état de polarisation dudit faisceau (PSG), un support pour supporter un échantillon, un moyen d'analyseur pour sélectionner des états de polarisation d'un faisceau de rayonnement électromagnétique après qu'il ait interagit avec un emplacement spécifique sur un échantillon placé sur ledit support, et un détecteur d'ellipsomètre (PSD) ;
b) fourniture d'un système d'alignement d'échantillon qui fait en sorte que le rayonnement électromagnétique produit de la sorte soit rendu incident sensiblement sur le même point sur ledit échantillon que cela est le cas pour le faisceau d'ellipsomètre ;
le système d'alignement d'échantillon comprenant :
i) une première source de rayonnement électromagnétique (LSA) ;
ii) un séparateur de faisceau (BS) ;
iii) un miroir (M41) ;
iv) un détecteur d'alignement (QD44) ;
ledit séparateur de faisceau (BS) étant positionné de manière à envoyer :
une partie d'un premier faisceau de rayonnement électromagnétique de ladite source (LSA) de celui-ci perpendiculairement sur ledit échantillon (S) ; et
de sorte que lorsque ledit échantillon est aligné en inclinaison, ladite partie dudit premier faisceau, après avoir été normalement réfléchie par ledit échantillon, est renvoyée le long du trajet de son incidence, à travers ledit séparateur de faisceau (BS) et vers ledit détecteur d'alignement (QD22) ;
c) utilisation de la sortie dudit détecteur d'alignement fourni à l'étape b afin d'effectuer un alignement en hauteur verticale de l'échantillon ;
d) obtention de données ellipsométriques de la part du détecteur d'ellipsomètre ;
e) analyse desdites données de système d'ellipsomètre ;
**caractérisé en ce que** :
le procédé comprend en outre l'étape consistant à :
f) munir le système d'alignement d'une deuxième (LSb) source de rayonnement électromagnétique ;
dans lequel ladite deuxième source fournit un deuxième faisceau de rayonnement électromagnétique envoyé de manière à être incident sur ledit échantillon (S) selon un angle oblique de sorte qu'il est incident dessus sensiblement au même emplacement où le premier faisceau est incident, et après avoir été réfléchi obliquement par ledit échantillon (S), étant envoyé de manière à être réfléchi par ledit miroir (M41) vers ledit détecteur d'alignement (QD44) lorsque ledit échantillon est aligné en hauteur ;
lesdites première (LSa) et deuxième (LSb) sources produisant un rayonnement électromagnétique à différentes longueurs d'onde et/ou à différentes fréquences, lesquelles peuvent être distinguées par le détecteur d'alignement (QD44) ;
où, lors de l'utilisation, la sortie dudit détecteur d'alignement est utilisée pour effectuer un alignement en hauteur verticale et en inclinaison de l'échantillon, et avec l'échantillon aligné, des données ellipsométriques étant obtenues de la part du détecteur d'ellipsomètre.

13. Procédé tel que revendiqué dans les revendications 9 ou 12, comprenant par ailleurs une étape de fourniture d'un dispositif d'ajustement, dans lequel ledit dispositif d'ajustement peut ajuster l'inclinaison dudit support, et dans lequel ledit dispositif d'ajustement peut ajuster la position relative dudit système d'ellipsomètre et de détection d'alignement par rapport audit support.
